# EUROPEAN PATENT APPLICATION

(11) **EP 3 142 370 A1**
(43) Date of publication of application: **15.03.2017**
(21) Application number: 14891233.0
(22) Date of filing: 10.12.2014
(51) Int. Cl.: H04N 21/262, H04N 21/258

(54) **METHOD, DEVICE AND SYSTEM FOR PROCESSING MEDIA RESOURCE INFORMATION**

(30) Priority: 05.05.2014 CN 201410186871
(71) Applicant: Institute of Acoustics, Chinese Academy of Sciences, Haidian District Beijing 100190 (CN); Shanghai 3NTV Network Technology Co. Ltd., Shanghai 200072 (CN)
(72) Inventor: CHENG, Gang, Beijing 100190 (CN); YE, Xiaozhou, Beijing 100190 (CN); WANG, Jinlin, Beijing 100190 (CN)
(74) Representative: Walsh, Marie Goretti
(86) International application number: PCT/CN2014/093465
(87) International publication number: WO 2015/169085

(57) **Abstract**

The present invention relates to a method, a device and a system for processing media resource information. The method comprises: a server acquires media resource information and user viewing information, the media resource information comprising media features, and the user viewing information comprising user features; the server ranks the media resource information according to the media features and the user features, so as to generate a first sequence; the server schedules the first sequence into time periods of idle channels according to preset priority of channels and time periods so as to generate a program list, and sends the program list to a client; the server receives an update request sent by the client, the update request comprising time baseline changes; and the server updates the program list according to the time baseline changes.

## Description

### TECHNICAL FIELD

The present invention relates to the field of image communication, and more particularly to a method, device and system for processing media resource information.

### BACKGROUND OF THE INVENTION

In recent years, with the explosive growth of video resources on the internet, network videos have become a main application of the Internet and have become an important source for a user to acquire media resources such as movies, television (TV) plays and sports & entertainments. A live video service, a video-on-demand service, a serialized video service and a video sharing service provided via the Internet have become important ways for user viewing. To respond to challenges from the Internet, radio and digital televisions, while enriching contents of their own live channels, high-definition channels popularize a two-way network, provide interaction services such as an on-demand service, a time-shift service and a multi-screen interaction service, and also strive to provide more contents and applications to a user. Smart television terminals employing an operating system such as Android, which includes a television set, a set-top box and the like, are becoming mainstream products pushed by manufactures and are rapidly popularized. A habit of a user is being guided from "watching" a television to "utilizing" a television by great capacities and diversities of television contents, the integration and interaction of television services and intelligentization and internetization of television terminals. However, there is a significant difference between user' viewing behaviors for a digital TV and an Internet video, causing much difficulties that are faced in the transition to "utilizing" a television.

In a digital TV, a set of television programs is equivalent to a television channel in an analog TV. A list of television programs is a combination of a series of program events which are successive in time, the program event is a program content corresponding to a specific time period. A digital TV employs an electronic program guide (EPG) to describe a broadcast time of a program and program information, and navigates television programs and interacts with a user by the EPG. Over the years, a digital TV user has been accustomed to television programs pushed passively and selects a television program set by a television station by the EPG or by switching channels. On the Internet, massive video contents are mostly presented to users by video websites by a way of web or client applications. The program contents are independently provided, not to be connected together in time. A user needs to actively browse and search video contents of interest, a video website provides a video content navigation to the user by a way of hot recommendation, information classification and retrieval, and the user needs to go through multi-stage click operations to choose a program to play. At an aspect, it is difficult for a user, when the user is faced with two types of different media resources--digital TVs and Internet videos, to change his viewing habits and operating manners, as there is no means for integrating the digital TVs with the Internet videos; at another aspect, when a user is faced with massive media resources, it is difficult for him to rapidly find a program event which he desires to watch; at yet another aspect, a digital television channel which schedules programs towards general users and the current classification and recommendation manner of Internet videos lack individual characteristics for an individual user and also lack a personalized spreading manner, thus are contradicted with personalized viewing requirements of the user.

### SUMMARY OF THE INVENTION

An objective of the present invention is to schedule media resource information generated from a live program, a time shift program, an on-demand program of TVs and/or a live program, a time-shift program, an on-demand program of network television IPTVs and/or a network video into a program list and provide it to a user by a way of channels, so as to solve problems that there is no means for integrating the digital TVs with the Internet videos, it is difficult to rapidly obtain a program event which one desires to watch, individual characteristics for an individual user are lacked, a personalized spreading manner is also lacked, and there is a contradiction with personalized viewing requirements of the user.

At a first aspect, an embodiment of the present invention provides a method for processing media resource information generated from a live program, a time-shift program, an on-demand program of TVs and/or a live program, a time-shift program, an on-demand program of network television IPTVs and/or a network video, the method comprises:
a server acquires media resource information, wherein the media resource information comprises media features;
the server acquires user viewing information of a client, wherein the user viewing information comprises user features;
the server ranks the media resource information according to the media features and the user features, so as to generate a first sequence;
the server schedules the first sequence into time periods of idle channels according to preset priorities of channels and time periods so as to generate a program list, and sends the program list to the client;
the server receives an update request sent by the client, wherein the update request comprises time baseline changes;
the server updates the program list according to the time baseline changes.

In conjunction with the first aspect, in a first possible implementation of the first aspect, the server ranks the media resource information according to the media features and the user features, so as to generate a first sequence, specifically comprises:
the server dynamically adjusts the first sequence according to changes of the media features and the user features; wherein, the media features comprise a name and/or a type and/or a play source and/or a duration and/or a start and end time and/or an encoding and/or a rate and/or an event description of media resources, the user features comprise viewing regularity of a user and/or viewing preference and/or viewing rating.

In conjunction with the first aspect, in a second possible implementation of the first aspect, the media features comprise a type of the media resource information, the type comprises live-type media resource information, time shift-type media resource information and on demand-type media resource information;
the server ranks the media resource information according to the media features and the user features, so as to generate a first sequence, specifically comprises:
the server screens out the live-type media resource information from the media resource information, sets a priority of the live-type media resource information according to preset priorities of user features, so as to generate a live-type first sequence;
the server screens out the time shift-type media resource information from the media resource information, sets a priority of the time shift-type media resource information according to user features, so as to generate a time shift-type first sequence;
the server screens out the on demand-type media resource information from the media resource information, sets a priority of the on demand-type media resource information according to user features, so as to generate an on demand-type first sequence;
the server generates a first sequence according to the priorities of the live-type first sequence, the time shift-type first sequence and the on demand-type first sequence.

In conjunction with the first aspect or the second possible implementation of the first aspect, in a third possible implementation of the first aspect, the server schedules the first sequence into time periods of idle channels according to preset priorities of time periods of channels, specifically comprises:
the server judges whether a first time period of a first channel is idle when the type is live-type media resource information, schedules the live-type media resource information with the highest priority in the live-type first sequence into the first time period of the first channel if the first time period of the first channel is idle; judges whether a first time period of a second channel is idle if the first time period of the first channel is occupied, until the live-type first sequence is scheduled into time periods of idle channels;
the server acquires an original live time period and a time-shiftable range of the live-type media resource information when the type is time shift-type media resource information; the server judges whether an original live time period of the first channel is idle, schedules the time shift-type media resource information with the highest priority in the time shift-type first sequence into the original live time period of the first channel if the original live time period of the first channel is idle; judges whether a time-shiftable range of the first channel is idle if the original live time period of the first channel is occupied, until the time shift-type first sequence is scheduled into time periods of the idle channels;
the server judges whether a regular time period of a first channel is idle when the type is on demand-type media resource information, schedules the on demand-type media resource information with the highest priority in the on demand-type first sequence into the regular time period of the first channel if the regular time period of the first channel is idle; judges whether a regular time period of a second channel is idle if the regular time period of the first channel is occupied, until the on demand-type first sequence is scheduled into time periods of the idle channels, wherein priorities of channels are ranked in an ascending order by channel numbers.

In conjunction with the first aspect, in a fourth possible implementation of the first aspect, the method further comprises: the server may generate one program list; or,
the server decomposes said one program list into a plurality of program lists according to channel numbers.

In a second aspect, an embodiment of the present invention provides a device for processing media resource information generated from a live program, a time-shift program, an on-demand program of TVs and/or a live program, a time-shift program, an on-demand program of network television IPTVs and/or a network video, the device comprises: a first acquiring unit, a second acquiring unit, a ranking unit, a scheduling unit, a receiving unit and a updating unit;
the first acquiring unit is configured to acquire media resource information, wherein the media resource information comprises media features;
the second acquiring unit is configured to acquire user viewing information of a client, wherein the user viewing information comprises user features;
the ranking unit is configured to rank the media resource information according to the media features and the user features so as to generate a first sequence;
the scheduling unit is configured to schedule the first sequence into time periods of idle channels according to preset priorities of channels and time periods so as to generate a program list, and send the program list to the client;
the receiving unit is configured to receive an update request sent by the client, wherein the update request comprises time baseline changes;
the updating unit is configured to update the program list according to the time baseline changes.

In conjunction of the second aspect, in a first possible implementation of the second aspect, the ranking unit is specifically configured to:
adjust dynamically the first sequence according to changes of the media features and user features by the server; wherein, the media features comprise a name and/or a type and/or a play source and/or a duration and/or a start and end time and/or an encoding and/or a rate and/or an event description of media resources, the user features comprise viewing regularity of a user and/or viewing preference and/or viewing rating.

In conjunction with the second aspect, in a second possible implementation of the second aspect, the media features comprise a type of the media resource information, the type comprises live-type media resource information, time shift-type media resource information and on demand-type media resource information;
the ranking unit is specifically configured to: screen out the live-type media resource information from the media resource information, set a priority of the live-type media resource information according to user features, so as to generate a live-type first sequence;
screen out the time shift-type media resource information from the media resource information, set a priority of the time shift-type media resource information according to user features, so as to generate a time shift-type first sequence;
screen out the on demand-type media resource information from the media resource information, set a priority of the on demand-type media resource information according to user features, so as to generate an on demand-type first sequence;
generate a first sequence according to the priorities of the live-type first sequence, the time shift-type first sequence and the on demand-type first sequence.

In conjunction with the second aspect or the second possible implementation of the second aspect, in a third possible implementation of the second aspect, the scheduling unit is specifically configured to:
judge whether a first time period of a first channel is idle when the type is live-type media resource information, schedule the live-type media resource information with the highest priority in the live-type first sequence into the first time period of the first channel if the first time period of the first channel is idle; judge whether a first time period of a second channel is idle if the first time period of the first channel is occupied, until the live-type first sequence is scheduled into time periods of idle channels;
acquire an original live time period and a time-shiftable range of the live-type media resource information when the type is time shift-type media resource information; judge whether an original live time period of the first channel is idle, schedule the time shift-type media resource information with the highest priority in the time shift-type first sequence into the original live time period of the first channel if the original live time period of the first channel is idle; judge whether a time-shiftable range of the first channel is idle if the original live time period of the first channel is occupied, until the time shift-type first sequence is scheduled into time periods of the idle channels;
judge whether a regular time period of a first channel is idle when the type is on demand-type media resource information, schedule the on demand-type media resource information with the highest priority in the on demand-type first sequence into the regular time period of the first channel if the regular time period of the first channel is idle; judge whether a regular time period of a second channel is idle if the regular time period of the first channel is occupied, until the on demand-type first sequence is scheduled into time periods of the idle channels, wherein priorities of channels are ranked in an ascending order by channel numbers.

In a third aspect, an embodiment of the present invention provides a system for processing media resource information, the system comprises the device and the client of the second aspect.

The present invention acquires media resource information through a server, wherein the media resource information comprises media features; acquires user viewing information of a client, wherein the user viewing information comprises user features; ranks the media resource information according to the media features and the user features, so as to generate a first sequence; schedules the first sequence into time periods of idle channels according to preset priorities of channels and time periods so as to generate a program list, and sends the program list to the client; receives an update request sent by the client, wherein the update request comprises time baseline changes; updates the program list according to the time baseline changes, thereby solving the difficulties in the transition of user' viewing habits and operating manners, integrating the digital TVs with the Internet videos together and providing them to a user by a way of program lists.

### BRIEF DESCRIPTION OF THE DRAWINGS

Fig. 1 is a diagram of a scenario for playing and controlling a media resource according to an embodiment of the present invention;
Fig. 2 is a flow diagram of a method for processing media resource information according to embodiment one of the present invention;
Fig. 3 is a flow diagram of generating a first sequence in processing media resource information according to embodiment one of the present invention;
Fig. 4 is a flow diagram of scheduling media resource information according to embodiment one of the present invention;
Fig. 5 is a flow diagram of changing a time baseline of a client according to embodiment one of the present invention;
Fig. 6 is a schematic diagram of a device for processing media resource information according to embodiment two of the present invention.

### DETAILED DESCRIPTION OF THE INVENTION

Hereinafter, the technical solutions of the present invention will be described in further detail through the accompanying drawings and embodiments.

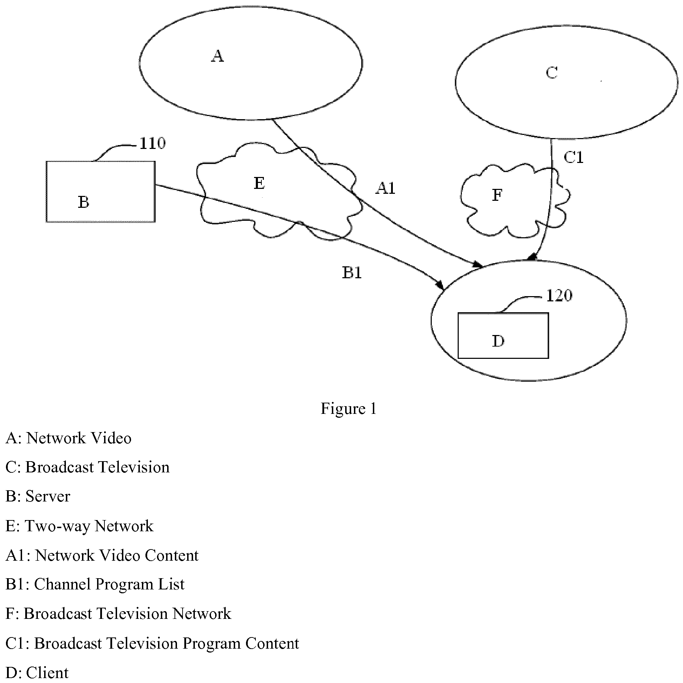

Fig. 1 is a diagram of a scenario for playing and controlling a media resource according to an embodiment of the present invention. As shown in Fig. 1, a server 110 and a client 120 are included in the scenario of playing and controlling a media resource.

The client 120 is located within a home, and connected with the server 110 via a two-way network. The server 110 provides services to the client 120 via the two-way network. The client 120 watches media resources via the two-way network.

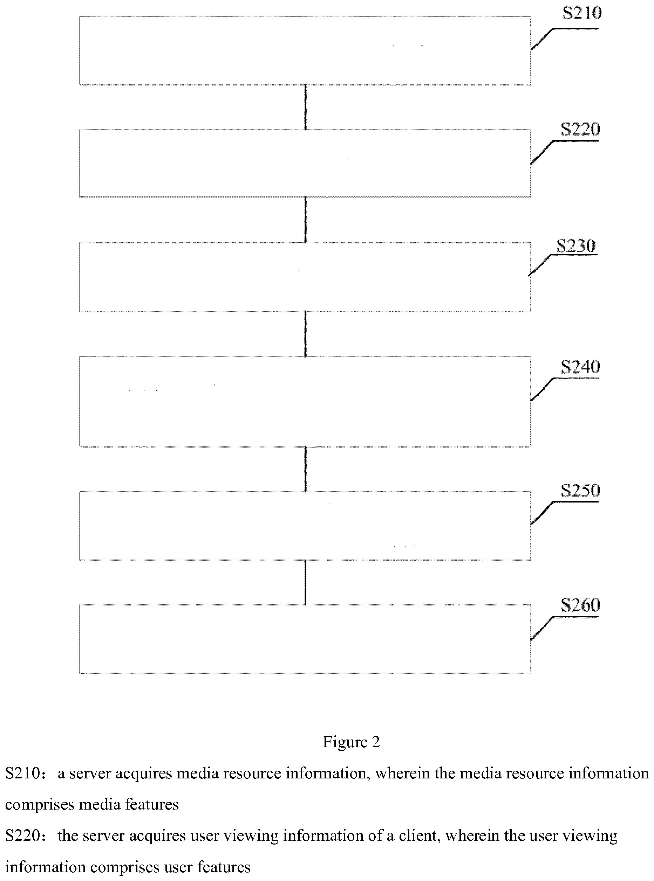

Fig. 2 is a flow diagram of a method for processing media resource information according to embodiment one of the present invention. As shown in Fig. 2, in the present embodiment, the executive body is the server.

Step S210, the server acquires media resource information, wherein the media resource information comprises media features.

Specifically, the media resource information is generated from media resources, which may be a live program, a time-shift program or an on-demand program of TVs, or may also be a live program, a time-shift program or an on-demand program of Internet protocol televisions (IPTV), and may further be Internet resources such as network videos. The server acquires these media resource information through the prior art, such as by parsing data packets downloaded by a user and so on, and saves the acquired media resource information in a media resource information table. A generated media resource information table may be a table as shown in Table 1, wherein, the media resource information table comprises media features therein, which comprises a name, a type, a play source, a duration, a start and end time, an encoding, a rate and an event description of a media resource. In some embodiments, the name may be a title of a movie or a television play, the type may comprise a live, a time shift and an on demand, the play source is used to locate the media resource information, such as a network identity (ID), a channel ID or a program ID of a live program for cable televisions, a content ID of an on-demand program for IPTVs, and the uniform/universal resource locator (URL) of a network video, and the event description may be a brief introduction of a movie or a brief introduction of a television play or the like.

A possible expression form of the media resource information table is as follows:

| | | | | | | | |
|---|---|---|---|---|---|---|---|
| Name | Type | Play Source | Duration | Start and End Time | Encoding | Rate | Event Description |

Step 220, the server acquires user viewing information of a client, wherein the user viewing information comprises user features;
specifically, the user viewing information comprises user features which may comprise viewing regularity of a user, viewing preference and viewing rating (hit situation). The viewing regularity of a user may be a regularity that the user watches a particular program at a particular time, for example, the user watches the CCTV News at 19:00 every day, the Premier League games at night on weekends, and the like; the viewing preference may be a program which a user often watches, for example, the user often watches sports programs, variety shows and the like; the hit situation may be used to recommend programs, wherein the viewing rating may be obtained by a survey for viewing ratings or a statistics by Internet video websites.

It is to be explained that the order of step S210 and step S220 is not limited, the server may first acquire media resource information and then acquire user viewing information, or alternatively, the server may first acquire user viewing information and then acquires media resource information. The server may also simultaneously acquire media resource information and user viewing information.

Step S230, the server ranks the media resource information according to the media features and the user features, so as to generate a first sequence.

Specifically, when the media feature is a type of media resource information, the type of media resource information comprises live-type media resource information, time shift-type media resource information and on-demand-type media resource information, and the server may preset the priorities of these three types of media resource information in a descending order as: the live type, the time shift type and the on-demand type. The server may also preset the priorities of user features, for example, may set the priorities of viewing regularity of a user, viewing preference and hit situation, and for example, the priorities of user features may be set in a descending order as: viewing regularity of a user, viewing preference and viewing rating.

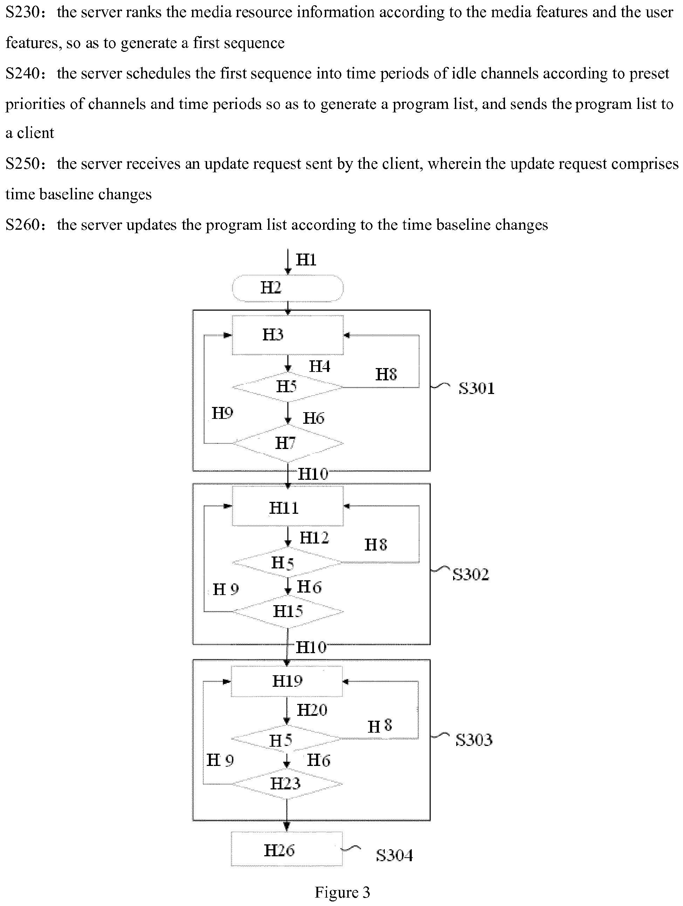

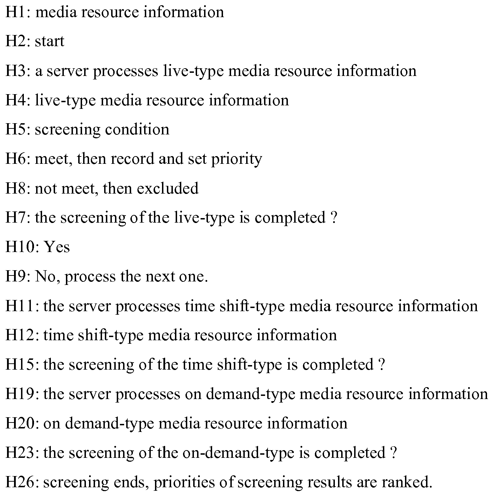

As shown in Fig. 3, Fig. 3 is a flow diagram of generating a first sequence in processing media resource information according to an embodiment of the present invention. Step S230 comprises:
step S301, the server screens out, according to the type of media resource information, the live-type media resource information from the media resource information, sets the priority of the screened live-type media resource information according to screening conditions which may be user features until the screening of the live-type resource information is completed, so as to generate a live-type first sequence;
step S302, the server screens out, according to the type of media resource information, the time shift-type media resource information from the media resource information, sets the priority of the screened time shift-type media resource information according to screening conditions which may be user features until the screening of the time shift-type resource information is completed, so as to generate a time shift-type first sequence;
step S303, the server screens out, according to the type of media resource information, the on demand-type media resource information from the media resource information, sets the priority of the screened on-demand-type media resource information according to screening conditions which may be user features until the screening of the on-demand-type resource information is completed, so as to generate an on-demand-type first sequence;
step S304, the server generates a first sequence according to the priorities of the live-type first sequence, the time shift-type first sequence and the on demand-type first sequence.

It is to be explained that, since the priorities of the live-type media resource information, the time shift-type media resource information and the on-demand-type media resource information can be dynamically set, the orders of step S301-step S303 can be changed.

Step S240, the server schedules the first sequence into time periods of idle channels according to preset priorities of channels and time periods so as to generate a program list, and sends the program list to a client.

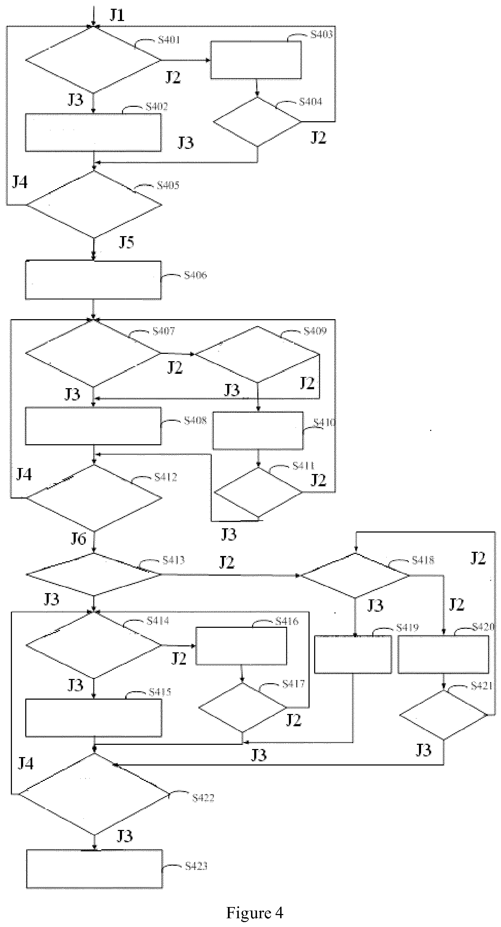

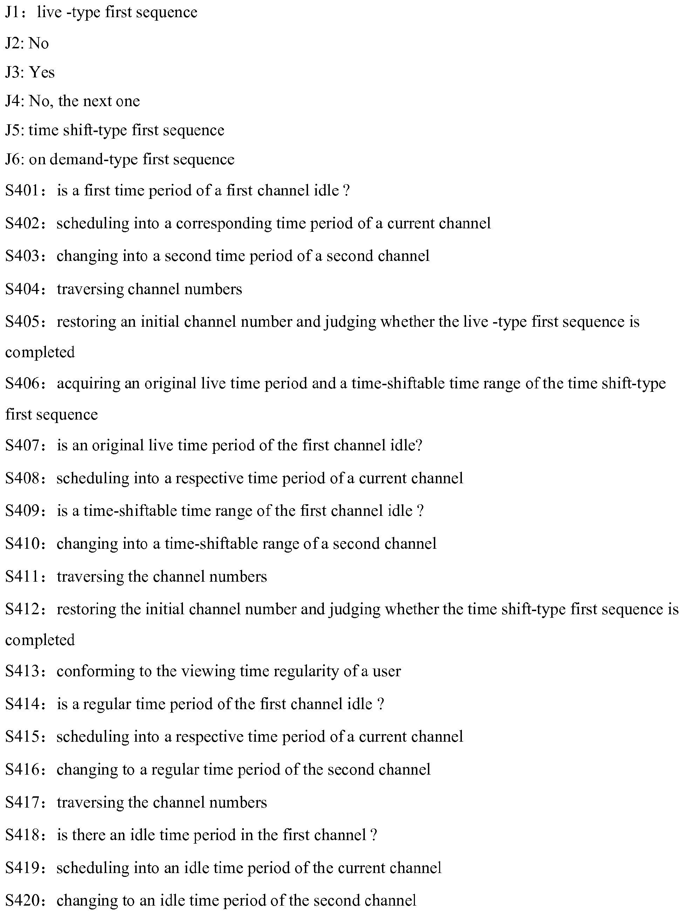

Specifically, as shown in Fig. 4, Fig. 4 is a flow diagram of scheduling media resource information according to embodiment one of the present invention. The executive body in Fig. 4 is the server, and step S240 specifically comprises:
step S401, judging whether a first time period of a first channel is idle, if the first time period of the first channel is idle, then jumping to step 402; if the first time period of the first channel is occupied, then jumping to step 403;
step S402, scheduling into a respective time period of a current channel (scheduling live-type media resource information with the highest priority in the live-type first sequence into the first time period of the first channel), then jumping to step S405;
step S403, switching to a first time period of a second channel, then jumping to step S404;
step S404, traversing channel numbers, if the channel numbers have been traversed, then jumping to step S405; if the channel numbers have not been traversed, then jumping to step S401 (judging whether a first time period of the second channel, a third channel,... is idle);
step S405, restoring an initial channel number, and judging whether the scheduling of the live-type first sequence is completed, if the scheduling of the live-type first sequence is completed, then jumping to step S406; if the scheduling of the live-type first sequence is not completed, then jumping to step S401;
step S406, acquiring an original live time period and a time-shiftable time range of the time shift-type first sequence, then jumping to step S407;
step S407, judging whether the original live time period of the first channel (the second channel, the third channel,...) is idle, if the original live time period of the first channel is idle, then jumping to step S408; if the original live time period of the first channel is occupied, then jumping to step S409;
step S408, scheduling into a respective time period of the current channel (scheduling the time shift-type media resource information with the highest priority in the time shift-type first sequence into the original live time period of the first channel), then jumping to step S412;
step S409, judging whether the time-shiftable range of the first channel is idle, if the time-shiftable range of the first channel is idle, then jumping to step S408 (scheduling the time shift-type media resource information with the highest priority in the time shift-type first sequence into the time-shiftable range of the first channel); if the time-shiftable range of the first channel is occupied, then jumping to step 410;
step S410, switching to the original live time period of the second channel, then jumping to step S411;
step S411, traversing channel numbers, if the channel numbers have been traversed, then jumping to step S412; if the channel numbers have not been traversed, then jumping to step S407 (judging whether the original live time period of the second channel, the third channel,... is idle);
step S412, restoring the initial channel number, judging whether the scheduling of the time shift-type first sequence is completed, if the scheduling of the time shift-type first sequence is completed, then jumping to step S413; if the scheduling of the time shift-type first sequence is not completed, then jumping to step S407 (judging whether the original live time period of the second channel, the third channel,... is idle);
step S413, judging whether the on demand-type first sequence conforms to a viewing time regularity of a user, if the on demand-type first sequence conforms to the viewing time regularity of a user, then jumping to step S414; if the on demand-type first sequence does not conform to the viewing time regularity of a user, then jumping to step S418;
step S414, judging whether a regular time period of the current channel (the first channel, the second channel, the third channel...) is idle, if a regular time period of the first channel is idle, then jumping to step S415; if the regular time period of the first channel is occupied, then jumping to step S416;
step S415, scheduling the on demand-type media resource information with the highest priority in the on-demand-type first sequence into the regular time period of the first channel, then jumping to step S422;
step S416, switching to a regular time period of the second channel, then jumping to step S417;
step S417, traversing channel numbers, if the channel numbers have been traversed, then jumping to step S422; if the channel numbers have not been traversed, then jumping to step S414 (judging whether the regular time period of the second channel is idle);
step S418, judging whether there is an idle time period in the current channel (the first channel, the second channel...), if there is an idle time period in the first channel, then jumping to step S419; if there is not an idle time period in the first channel, then jumping to step S420;
step S419, scheduling the on demand-type media resource information with the highest priority in the on demand-type first sequence into the idle time period of the first channel, then jumping to step S422;
step S420, switching to the second channel, then jumping to step S421;
step S421, traversing channel numbers, if the channel numbers have been traversed, then jumping to step S422; if not traversed, then jumping to step S418 (judging whether there is an idle time period in the second channel);
step S422, restoring the initial channel number, judging whether the scheduling of the on demand-type first sequence is completed, if the scheduling of the on demand-type first sequence is completed, then jumping to step S423; if the scheduling of the on demand-type first sequence is not completed, then jumping to step S414.

Further, said method further comprises that: said server may generate one program list; alternatively, said server decomposes said one program list into a plurality of program lists according to channel numbers.

It is to be explained that the above described steps S401-S422 are just one scheduling method, and the present invention is not limited to this method. In the above described steps, the priorities of channels are ranked in an ascending order by channel numbers. The priorities of channels may also be ranked in a descending order by channel numbers.

Step S250, the server receives an update request sent by the client, wherein the update request comprises time baseline changes.

Step S260, the server updates the program list according to the time baseline changes.

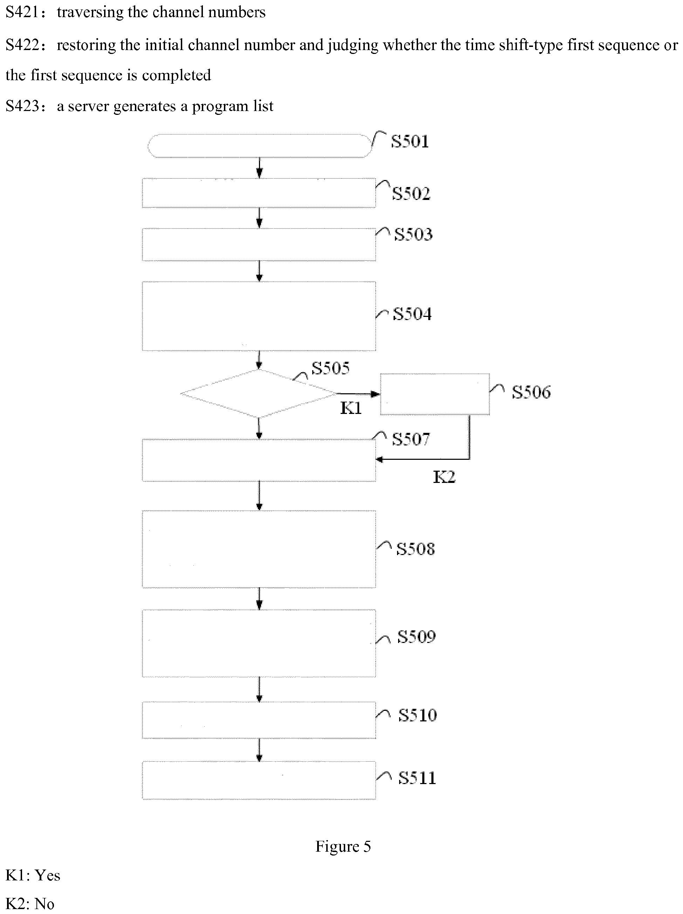

Specifically, as shown in Fig. 5, Fig. 5 is a flow diagram of changing a time baseline of a client according to embodiment one of the present invention. The executive body in Fig. 5 is the server, and step S250 and step S260 specifically comprise:
step S501, a client starts playing a current channel;
step S502, a program event of the current time period is an on-demand type, the client starts playing from the beginning of the on demand-type program event. Since there is a difference of T1 between the time when the client enters a channel to start playing and the start time of the current time period on the program list, the time baseline of the program list delays backwards T1 as a whole;
step S503, the client plays according to chronological order of the program list;
step S504, the client prompts the user whether to skip the current program and access the live program as the delayed time baseline causes that there is an overlap between the time periods of the current program event and the next program event, if the next program event is a live program;
step S505, the user chooses whether to skip the current program, if yes, then performing step S507; if not, then performing step S506;
step S506, the client completes playing the current program, the user cuts into a middle section of the live program, then performing step S507;
step S507, playing the live program and restoring the time baseline;
step S508, the client plays according to the program list and performs interaction controls such as fast forward, fast backward, pause upon encountering an on-demand program, causing the time baseline to be advanced. When the next program event is a live program, there is an idle time period between the current program event and the live program event;
step S509, the client sends an update request for the current program list to the server, in the request time baseline changes is included.
Step S510, the client plays according to an order of the updated program list;
step S511, the client ends playing.

Further, the server ranks the media resource information according to the media features and the user features so as to generate a first sequence, specifically comprises:
the server dynamically adjusts the first sequence according to changes of media features and user features; wherein, the media features comprise a name and/or a type and/or a play source and/or a duration and/or a start and end time and/or an encoding and/or a rate and/or an event description of media resources, the user features comprise viewing regularity of a user and/or viewing preference and/or viewing rating.

Specifically, when media features change, or the priorities of user features change, or both media features and user features change, the server dynamically adjusts the generated first sequence, so as to regenerate a program list.

It is to be explained that the method of updating a program list and the method of generating a program list at a client are the same, no details is given here. A program event is each program in the program list and presented in the form of tables, which may be a media resource information table as shown in Figure 1.

An embodiment of the present invention provides a method for processing media resource information, the server acquires media resource information, wherein the media resource information comprises media features; the server acquires user viewing information of a client, wherein the user viewing information comprises user features; the server ranks the media resource information according to the media features and the user features, so as to generate a first sequence; the server schedules the first sequence into time periods of idle channels according to preset priorities of channels and time periods so as to generate a program list, and sends the program list to the client; the server receives an update request sent by the client, wherein the update request comprises time baseline changes; the server updates the program list according to the time baseline changes and provides it to a user by a way of channels, thereby solving the difficulties in the transition of user' viewing habits and operating manners, integrating the digital TVs with the Internet videos together and meeting the requirements of user features.

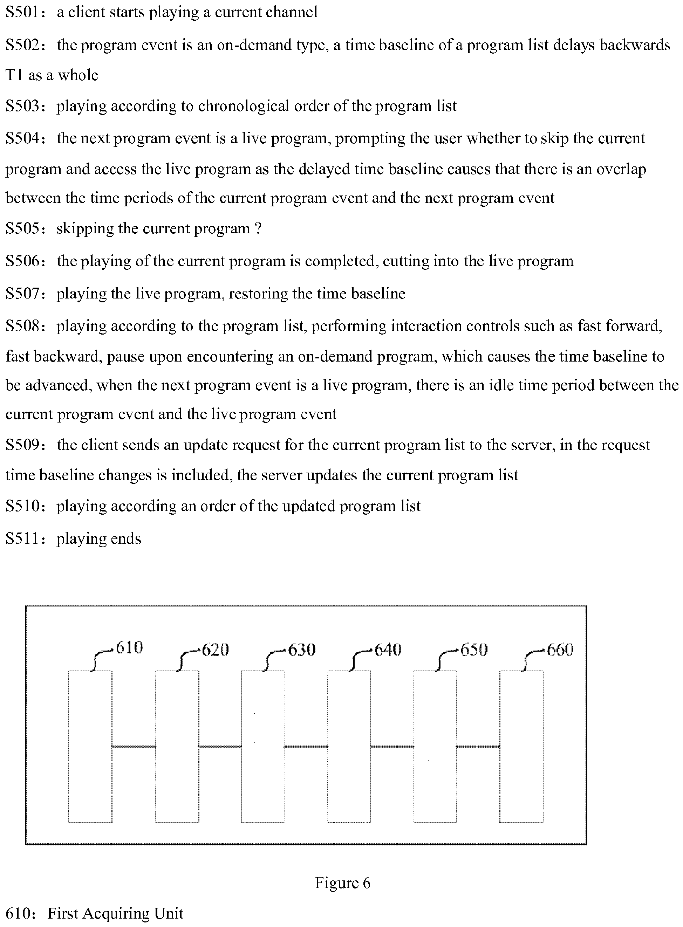

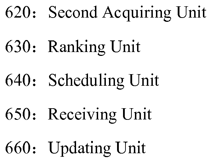

Fig. 6 is a schematic diagram of a device for processing media resource information according to embodiment two of the present invention. As shown in Fig. 6, the present embodiment comprises: a first acquiring unit 610, a second acquiring unit 620, a ranking unit 630, a scheduling unit 640, a receiving unit 650 and an updating unit 660.

Said first acquiring unit 610 is configured to acquire media resource information, wherein the media resource information comprises media features;
said second acquiring unit 620 is configured to acquire user viewing information of a client, wherein the user viewing information comprises user features;
said ranking unit 630 is configured to rank the media resource information according to the media features and the user features, so as to generate a first sequence;
said scheduling unit 640 is configured to schedule the first sequence into time periods of idle channels according to preset priorities of channels and time periods so as to generate a program list, and send the program list to a client;
said receiving unit 650 is configured to receive an update request sent by the client, wherein the update request comprises time baseline changes;
said updating unit 660 is configured to update the program list according to the time baseline changes.

Further, said ranking unit 630 is specifically configured to:
adjust dynamically the first sequence according to changes of the media features and user features by the server; wherein, the media features comprise a name and/or a type and/or a play source and/or a duration and/or a start and end time and/or an encoding and/or a rate and/or an event description of media resources, the user features comprise viewing regularity of a user and/or viewing preference and/or viewing rating.

Further, said media features comprise a type of said media resource information, said type comprises live-type media resource information, time shift-type media resource information and on demand-type media resource information;
said ranking unit 630 is specifically configured to: screen out the live-type media resource information from the media resource information, set the priority of the live-type media resource information according to user features, so as to generate a live-type first sequence;
screen out the time shift-type media resource information from the media resource information, set the priority of the time shift-type media resource information according to user features, so as to generate a time shift-type first sequence;
screen out the on demand-type media resource information from the media resource information, set the priority of the on demand-type media resource information according to user features, so as to generate an on demand-type first sequence;
generate a first sequence according to the priorities of the live-type first sequence, the time shift-type first sequence and the on demand-type first sequence.

Further, said scheduling unit 640 is specifically configured to:
judge whether a first time period of a first channel is idle when said type is live-type media resource information, schedule the live-type media resource information with the highest priority in the live-type first sequence into the first time period of the first channel if the first time period of the first channel is idle, judge whether a first time period of a second channel is idle if the first time period of the first channel is occupied, until the live-type first sequence is scheduled into time periods of idle channels;
acquire an original live time period and a time-shiftable range of the live-type media resource information when said type is time shift-type media resource information; judge whether an original live time period of the first channel is idle, schedule the time shift-type media resource information with the highest priority in the time shift-type first sequence into the original live time period of the first channel if the original live time period of the first channel is idle; judge whether a time-shiftable range of the first channel is idle if the original live time period of the first channel is occupied, until the time shift-type first sequence is scheduled into time periods of said idle channels;
judge whether a regular time period of a first channel is idle when said type is on-demand-type media resource information, schedule the on-demand-type media resource information with the highest priority in the on-demand-type first sequence into the regular time period of the first channel if the regular time period of the first channel is idle; judge whether a regular time period of a second channel is idle if the regular time period of the first channel is occupied, until the on-demand-type first sequence is scheduled into time periods of said idle channels, wherein priorities of channels are ranked in an ascending order by channel numbers.

Further, an embodiment of the present invention may further comprise a decomposition unit configured to decompose one program list into a plurality of program lists according to channel numbers.

Further, an embodiment of the present invention provides a system for processing media resource information, said system comprises the device and the client as shown in Fig. 6.

With a device for processing media resource information provided by an embodiment of the present invention, which comprises a first acquiring unit configured for acquiring media resource information, wherein the media resource information comprises media features; a second acquiring unit configured for acquiring user viewing information of a client, wherein the user viewing information comprises user features; a ranking unit configured for ranking the media resource information according to the media features and the user features, so as to generate a first sequence; a scheduling unit configured for scheduling the first sequence into time periods of idle channels according to preset priorities of channels and time periods so as to generate a program list, and sending the program list to the client; a receiving unit configured for receiving an update request sent by the client, wherein the update request comprises time baseline changes; and an updating unit configured for updating the program list according to the time baseline changes and providing it to a user by a way of channels, the difficulties in the transition of user' viewing habits and operating manners are solved, the digital TVs and the Internet videos are integrated together, meeting the requirement of user features.

Finally, it should be noted that the aforementioned embodiments are only used for illustrating, rather than limiting the technical solution of the present invention. Although the present invention has been described in detail with reference to the embodiments, those skilled in the art shall understand that modifications or equivalent substitutions can be made to the technical solution of the present invention without departing from the scope and spirit of the technical solution of the present invention, and thereby should all be encompassed by the claims of the present invention.

## Claims

1. A method for processing media resource information generated from a live program, a time-shift program, an on-demand program of TVs and/or a live program, a time-shift program, an on-demand program of network television IPTVs and/or a network video, wherein the method comprises:
a server acquires media resource information, wherein the media resource information comprises media features;
the server acquires user viewing information of a client, wherein the user viewing information comprises user features;
the server ranks the media resource information according to the media features and the user features, so as to generate a first sequence;
the server schedules the first sequence into time periods of idle channels according to preset priorities of channels and time periods so as to generate a program list, and sends the program list to the client;
the server receives an update request sent by the client, wherein the update request comprises time baseline changes;
the server updates the program list according to the time baseline changes.

2. The method of claim 1, wherein the server ranks the media resource information according to the media features and the user features so as to generate a first sequence, specifically comprises:
the server dynamically adjusts the first sequence according to changes of the media features and the user features; wherein, the media features comprise a name and/or a type and/or a play source and/or a duration and/or a start and end time and/or an encoding and/or a rate and/or an event description of media resources, the user features comprise viewing regularity of a user and/or viewing preference and/or viewing rating.

3. The method of claim 3, wherein the media features comprise a type of the media resource, the type comprises live-type media resource information, time shift-type media resource information and on demand-type media resource information;
the server ranks the media resource information according to the media features and the user features so as to generate a first sequence, specifically comprises:
the server screens out the live-type media resource information from the media resource information, sets a priority of the live-type media resource information according to preset priorities of user features, so as to generate a live-type first sequence;
the server screens out the time shift-type media resource information from the media resource information, sets a priority of the time shift-type media resource information according to user features, so as to generate a time shift-type first sequence;
the server screens out the on demand-type media resource information from the media resource information, sets a priority of the on demand-type media resource information according to user features, so as to generate an on demand-type first sequence;
the server generates a first sequence according to the priorities of the live-type first sequence, the time shift-type first sequence and the on demand-type first sequence.

4. The method of claim 1 or 3, wherein the server schedules the first sequence into time periods of idle channels according to preset priorities of time periods of channels, specifically comprises:
the server judges whether a first time period of a first channel is idle when the type is live-type media resource information, schedules the live-type media resource information with the highest priority in the live-type first sequence into the first time period of the first channel if the first time period of the first channel is idle; judges whether a first time period of a second channel is idle if the first time period of the first channel is occupied, until the live-type first sequence is scheduled into time periods of idle channels;
the server acquires an original live time period and a time-shiftable range of the live-type media resource information when the type is time shift-type media resource information; the server judges whether an original live time period of the first channel is idle, schedules the time shift-type media resource information with the highest priority in the time shift-type first sequence into the original live time period of the first channel if the original live time period of the first channel is idle; judges whether a time-shiftable range of the first channel is idle if the original live time period of the first channel is occupied, until the time shift-type first sequence is scheduled into time periods of the idle channels;
the server judges whether a regular time period of a first channel is idle when the type is on demand-type media resource information, schedules the on demand-type media resource information with the highest priority in the on demand-type first sequence into the regular time period of the first channel if the regular time period of the first channel is idle; judges whether a regular time period of a second channel is idle if the regular time period of the first channel is occupied, until the on demand-type first sequence is scheduled into time periods of the idle channels, wherein priorities of channels are ranked in an ascending order by channel numbers.

5. The method of claim 1, further comprising: the server may generate one program list; or,
the server decomposes said one program list into a plurality of program lists according to channel numbers.

6. A device for processing media resource information generated from a live program, a time-shift program, an on-demand program of TVs and/or a live program, a time-shift program, an on-demand program of network television IPTVs and/or a network video, wherein the device comprises: a first acquiring unit, a second acquiring unit, a ranking unit, a scheduling unit, a receiving unit and a updating unit;
the first acquiring unit is configured to acquire media resource information, wherein the media resource information comprises media features;
the second acquiring unit is configured to acquire user viewing information of a client, wherein the user viewing information comprises user features;
the ranking unit is configured to rank the media resource information according to the media features and the user features so as to generate a first sequence;
the scheduling unit is configured to schedule the first sequence into time periods of idle channels according to preset priorities of channels and time periods so as to generate a program list, and send the program list to the client;
the receiving unit is configured to receive an update request sent by the client, wherein the update request comprises time baseline changes;
the updating unit is configured to update the program list according to the time baseline changes.

7. The device of claim 6, wherein the ranking unit is specifically configured to:
adjust dynamically the first sequence according to changes of the media features and user features by the server; wherein, the media features comprise a name and/or a type and/or a play source and/or a duration and/or a start and end time and/or an encoding and/or a rate and/or an event description of media resources, the user features comprise viewing regularity of a user and/or viewing preference and/or viewing rating.

8. The device of claim 6, wherein the media features comprise a type of the media resource information, the type comprises live-type media resource information, time shift-type media resource information and on demand-type media resource information;
the ranking unit is specifically configured to: screen out the live-type media resource information from the media resource information, set a priority of the live-type media resource information according to user features, so as to generate a live-type first sequence;
screen out the time shift-type media resource information from the media resource information, set a priority of the time shift-type media resource information according to user features, so as to generate a time shift-type first sequence;
screen out the on demand-type media resource information from the media resource information, set a priority of the on demand-type media resource information according to user features, so as to generate an on demand-type first sequence;
generate a first sequence according to the priorities of the live-type first sequence, the time shift-type first sequence and the on demand-type first sequence.

9. The device of claim 6 or 8, wherein the scheduling unit is specifically configured to:
judge whether a first time period of a first channel is idle when the type is live-type media resource information, schedule the live-type media resource information with the highest priority in the live-type first sequence into the first time period of the first channel if the first time period of the first channel is idle; judge whether a first time period of a second channel is idle if the first time period of the first channel is occupied, until the live-type first sequence is scheduled into time periods of idle channels;
acquire an original live time period and a time-shiftable range of the live-type media resource information when the type is time shift-type media resource information; judge whether an original live time period of the first channel is idle, schedule the time shift-type media resource information with the highest priority in the time shift-type first sequence into the original live time period of the first channel if the original live time period of the first channel is idle; judge whether a time-shiftable range of the first channel is idle if the original live time period of the first channel is occupied, until the time shift-type first sequence is scheduled into time periods of the idle channels;
judge whether a regular time period of a first channel is idle when the type is on demand-type media resource information, schedule the on demand-type media resource information with the highest priority in the on demand-type first sequence into the regular time period of the first channel if the regular time period of the first channel is idle; judge whether a regular time period of a second channel is idle if the regular time period of the first channel is occupied, until the on demand-type first sequence is scheduled into time periods of the idle channels, wherein priorities of channels are ranked in an ascending order by channel numbers.

10. A system for processing media resource information, comprising the device and the client of claims 6 to 9.
